# EUROPEAN PATENT SPECIFICATION

(11) **EP 4 378 711 B1**
(45) Date of publication and mention of the grant of the patent: **09.12.2026**
(21) Application number: 23194767.2
(22) Date of filing: 01.09.2023
(51) Int. Cl.: B60C 1/00, C08L 15/00

(54) **RUBBER COMPOSITION FOR TIRE TREAD AND TIRE**
KAUTSCHUKZUSAMMENSETZUNG FÜR REIFENLAUFFLÄCHE UND REIFEN
COMPOSITION DE CAOUTCHOUC POUR BANDE DE ROULEMENT DE PNEU ET PNEU

(30) Priority: 30.11.2022 JP 2022192176
(43) Date of publication of application: 05.06.2024
(73) Proprietor: Toyo Tire Corporation, Itami-shi, Hyogo 664-0847 (JP)
(72) Inventor: NISHIKAWA, Yuma, Itami-shi, Hyogo, 664-0847 (JP)
(74) Representative: Ricker, Mathias

(56) References cited:
- EP-A1- 2 799 480
- EP-A1- 4 056 640
- US-A1- 2019 389 995
- US-A1- 2020 024 432

## Description

### BACKGROUND OF THE INVENTION

### 1. Field of the Invention

The present invention relates to a rubber composition for a tire tread and also to a tire using the same.

### 2. Description of Related Art

One of the performances required for tires is grip performance on wet road surfaces (i.e., wet grip performance). It is known that in order to improve wet grip performance, silica is incorporated as a filler, and a resin is also incorporated.

For example, JP2019-206652A discloses a rubber composition for a tire, including 100 parts by mass of a rubber component containing 5 to 100 parts by mass of a styrene butadiene rubber and 0 to 80 parts by mass of a butadiene rubber, 0.1 to 100 parts by mass of a terpene-based resin having an α-pinene unit content of 65 to 100 mass%, and 0 to 500 parts by mass of silica. According to the description in JP2019-206652A, this improves grip performance, fuel efficiency, and abrasion resistance in a well-balanced manner.

JP2021-523260A discloses a rubber composition for a tire tread, including 100 parts by mass of a rubber component containing 5 to 40 parts of a specific butadiene rubber and 20 to 55 parts of a styrene butadiene rubber having a glass transition temperature of -75 to -50°C, 80 to 140 parts of silica, 30 to 50 parts of a specific hydrocarbon resin, and 10 to 30 parts of an oil. According to the description in JP2021-523260A, this improves one or more of rolling resistance, snow or ice traction, wet traction, and dry handling.

JP2018-083932A discloses a rubber composition for a tread, which incorporates a specific butadiene rubber and a terpene-based resin, and further incorporates silica. According to the description in JP2018-083932A, this improves fuel efficiency, abrasion resistance, and wet grip performance.

The EP 2 799 480 A1 discloses rubber composition for tires is provided in which a content of an isoprene-based rubber in 100 % by mass of a rubber component ranges from 10 % by mass to 100 % by mass, a content of a butadiene rubber in 100 % by mass of the rubber component ranges from 0 % by mass to 80 % by mass, a content of a styrene butadiene rubber in 100 % by mass of the rubber component ranges from 0 % by mass to 70 % by mass, and a content of a terpene-based resin having a hydroxyl value that is less than or equal to 20 and a softening point ranging from 106 °C to 124 °C ranges from 1 part by mass to 50 parts by mass, per 100 parts by mass of the rubber component.

The US 2019/389995 A1 discloses a rubber composition comprising 5 to 20 parts by mass of a terpene resin having a weight-average molecular weight of 500 to 4,000, 5 to 30 parts by mass of a liquid rubber and/or a liquid resin having a weight-average molecular weight of 100 to 4,000, and 95 to 160 parts by mass of silica, based on 100 parts by mass of a diene rubber, wherein a volume change rate of the rubber composition measured in accordance with JIS K 6258 after having been dipped in toluene of 40 °C. for 24 hours is of 220 to 270 %.

The US 2020/024432 A1 discloses a rubber composition for tires containing a rubber component including at least 80 % by mass in total of at least one of an isoprene-based rubber, a polybutadiene rubber, or a styrene-butadiene rubber, the rubber composition containing, per 100 parts by mass of the rubber component, 3 to 250 parts by mass of a reinforcing filler and 0.2 to 10 parts by mass of a specific tetrazine compound.

The EP 4 056 640 A1 discloses a rubber composition comprising, based on 100 parts by weight of elastomer (phr), 70 phr to 95 phr of diene based elastomer, wherein said diene based elastomer comprises 25 phr to 60 phr of a first diene based elastomer having a glass transition temperature within a range of -49 °C to -15 °C, and 10 phr to 45 phr of a second diene based elastomer having a glass transition temperature within a range of -50 °C to -110 °C, 5 phr to 30 phr of one or more of natural rubber and synthetic polyisoprene rubber, 40 phr to 70 phr of silica, and 10 phr to 40 phr of at least one terpene resin having a weight average molecular weight (Mw) of at least 900 g/mol.

### SUMMARY OF THE INVENTION

For example, for tires that can run also on snowy roads in winter, such as winter tires and all-season tires, low-temperature performance is also required along with wet grip performance. Low-temperature performance is the ability to maintain softness in a low-temperature environment of less than 0 °C, for example, to allow for driving on snowy roads. When a butadiene rubber having a low glass transition temperature is incorporated to impart low-temperature performance, the glass transition temperature of the entire rubber composition decreases, leading to a tendency for wet grip performance to deteriorate. Meanwhile, in a rubber composition incorporating a butadiene rubber, when a resin is added to improve the wet grip performance, the glass transition temperature increases, leading to a tendency for low-temperature performance to deteriorate. Like this, low-temperature performance and wet grip performance are contradictory, and their simultaneous achievement is difficult.

Meanwhile, in these tires, which can run on snowy roads, the tread block size is generally small, and thus the maintenance of fracture strength is a challenge. When a large amount of silica is incorporated into a rubber composition containing a butadiene rubber, it is difficult to control the dispersion of silica, making it difficult to maintain fracture strength.

In view of the above points, an object of some embodiments of the invention is to provide a rubber composition for a tire tread, which is capable of improving fracture strength while simultaneously achieving low-temperature performance and wet grip performance, and also a tire using the same.

The invention encompasses the following embodiments.
[1] A rubber composition for a tire tread, including: 100 parts by mass of a diene rubber component containing a butadiene rubber and a styrene butadiene rubber having a glass transition temperature of -50 °C or less, in which the glass transition temperature is a value measured in accordance with JIS K7121:2012 by a differential scanning calorimetry method at a temperature rise rate of 20 °C/min, the styrene butadiene rubber comprises a modified styrene butadiene rubber, the content of the butadiene rubber is 20 parts by mass or more, and the average glass transition temperature of the diene rubber component is -60 °C or less; 60 to 200 parts by mass of silica; and 20 to 60 parts by mass of a terpene-based resin having a β-pinene unit content of 80 mass% or more, the rubber composition for a tire tread further including 5 to 20 parts by mass of a thioester group-containing silane coupling agent per 100 parts by mass of the silica.
[2] The rubber composition for a tire tread according to [1], in which the butadiene rubber includes a modified butadiene rubber.
[3] The rubber composition for a tire tread according to [1] or [2], in which 100 parts by mass of the diene rubber component contains 40 parts by mass or more of the butadiene rubber.
[4] A tire having a tread made using the rubber composition for a tire tread according to any one of [1] to [3].

According to an embodiment of the invention, low-temperature performance and wet grip performance can be simultaneously achieved, and fracture strength can also be improved.

### DESCRIPTION OF EMBODIMENTS

A rubber composition for a tire tread (hereinafter also referred to as "rubber composition") according to this embodiment includes (A) a diene rubber component containing a butadiene rubber and a styrene butadiene rubber having a glass transition temperature of -50°C or less, (B) silica, (C) a terpene-based resin having a β-pinene unit content of 40 mass% or more, and (D) a thioester group-containing silane coupling agent.

Butadiene rubbers generally have low glass transition temperatures. As a result of using such a butadiene rubber that has a low glass transition temperature together with a styrene butadiene rubber that has a low glass transition temperature, and setting the glass transition temperature of the diene rubber component low, low-temperature performance can be improved. In addition, as a result of incorporating a terpene-based resin having a β-pinene unit content of 40 mass% or more, while maintaining the excellent low-temperature performance given by the butadiene rubber, the improving effect on wet grip performance given by the terpene-based resin can be exhibited. Further, as a result of using a thioester group-containing silane coupling agent as a silane coupling agent, the dispersibility of silica can be improved, making it possible to improve fracture strength. Therefore, it is expected that while simultaneously achieving both low-temperature performance and wet grip performance, fracture strength can be improved.

### [(A) Diene Rubber Component]

In this embodiment, the diene rubber component contains a butadiene rubber (BR) and a styrene butadiene rubber (SBR) having a glass transition temperature of -50 °C or less. As a result, the glass transition temperature of the diene rubber component can be reduced, thereby improving low-temperature performance.

A butadiene rubber is a polymer of 1,3-butadiene and is also referred to as polybutadiene. As the butadiene rubber, any of various butadiene rubbers generally used in tire rubber compositions can be used. The butadiene rubber may be a modified butadiene rubber whose terminal and/or backbone is modified, or may also be an unmodified butadiene rubber that is not modified.

As the butadiene rubber, one having a glass transition temperature (Tg) of -85 °C or less is preferably used. The Tg of the butadiene rubber is preferably -110 °C to -90 °C, or may also be -110 °C to -95 °C.

As used herein, the glass transition temperature (Tg) is a value measured in accordance with JIS K7121:2012 by a differential scanning calorimetry (DSC) method at a temperature rise rate of 20 °C/min (measurement temperature range: -150 °C to 50 °C).

In one embodiment, the butadiene rubber may include a high-cis butadiene rubber (high-cis BR) having a cis-1,4 bond content of 90 mass% or more. The cis-1,4 bond content of the high-cis BR is more preferably 96 mass% or more. The high-cis BR is preferably unmodified.

As the high-cis BR, a butadiene rubber polymerized using a neodymium (Nd)-based catalyst (Nd-BR) may be used. The neodymium-based catalyst may be neodymium alone, a compound of neodymium with other metals, or an organic compound containing neodymium. As specific examples, NdCl₃, Et-NdCl₂, and the like can be mentioned. A butadiene rubber polymerized using a neodymium-based catalyst has a microstructure with a high cis content and a low vinyl content. For example, the microstructure of the Nd-BR is preferably such that the cis-1,4 bond content is 96 mass% or more, and the vinyl group (1,2-vinyl bond) content is 1.0 mass% or less.

As used herein, the cis-1,4 bond content and the vinyl group content are values calculated from the integral ratio of the ¹H-NMR spectrum.

In one embodiment, the butadiene rubber may include a modified butadiene rubber (BR) modified at the terminal or backbone. As a result of using a modified butadiene rubber, the dispersibility of silica can be improved, and the fracture strength improving effect can be enhanced. In the case where a modified butadiene rubber is used, the butadiene rubber may be entirely a modified butadiene rubber, or it is also possible to use a modified butadiene rubber and an unmodified butadiene rubber together. In that case, it is preferable that 50 mass% or more, more preferably 70 mass% or more, of the butadiene rubber is a modified butadiene rubber.

As the modified butadiene rubber, a butadiene rubber that has a functional group introduced into the terminal and/or backbone thereof and thus is modified with the functional group is used. As functional groups, those having an interaction (reactivity or affinity) with silanol groups on the silica surface can be mentioned, and those containing heteroatoms can be mentioned. The heteroatom is preferably at least one member selected from the group consisting of an oxygen atom, a nitrogen atom, and a silicon atom. Specific examples of functional groups include at least one member selected from the group consisting of a polyorganosiloxane group, an alkoxysilyl group, a hydroxy group, an aldehyde group, a carboxy group, an alkoxy group, an amino group, an imino group, an epoxy group, and an amide group. As the modified butadiene rubber, it is preferable to use a terminally modified butadiene rubber having the above functional group at one or both of its molecular terminals.

In this embodiment, 100 parts by mass of the diene rubber component contains 20 parts by mass or more of a butadiene rubber. That is, 20 mass% or more of the diene rubber component is a butadiene rubber. As a result of increasing the proportion of butadiene rubber, the diene rubber component and the terpene-based resin are phase-separated, and the effectiveness in simultaneously achieving low-temperature performance and wet grip performance can be enhanced. From such a point of view, 100 parts by mass of the diene rubber component preferably contains 40 parts by mass or more, more preferably 60 parts by mass or more, and still more preferably 65 parts by mass or more, of a butadiene rubber. The butadiene rubber content per 100 parts by mass of the diene rubber component may be 40 to 90 parts by mass, 60 to 90 parts by mass, or 65 to 85 parts by mass.

The styrene butadiene rubber having a glass transition temperature (Tg) of -50 °C or less (hereinafter also referred to as low-Tg SBR) may be a solution-polymerized styrene butadiene rubber (SSBR), an emulsion-polymerized styrene butadiene rubber (ESBR), or a combination thereof. The low-Tg SBR may be a modified styrene butadiene rubber that is modified at the terminal and/or backbone (modified SBR), an unmodified styrene butadiene rubber that is not modified, or a combination thereof. In addition, it is also possible to use two or more kinds of SBRs having a Tg of -50 °C or less. The low-Tg SBR includes a modified SBR; 50 mass% or more, more preferably 60 mass% or more, of the low-Tg SBR is a modified SBR.

As the modified SBR (preferably modified SSBR), an SBR that has a functional group introduced into the terminal and/or backbone thereof and thus is modified with the functional group is used. As functional groups in the modified SBR, similarly to the case of modified butadiene rubbers, those having an interaction (reactivity or affinity) with silanol groups on the silica surface can be mentioned, and specific examples thereof are as described above.

The glass transition temperature (Tg) of the low-Tg SBR is preferably -55°C or less, or may be -80 °C to -50 °C, or -70 °C to -55 °C.

The low-Tg SBR content is not particularly limited and may be, in 100 parts by mass of the diene rubber component, 10 to 80 parts by mass, 15 to 60 parts by mass, or 20 to 40 parts by mass.

In this embodiment, the diene rubber component may be composed only of the butadiene rubber and low-Tg SBR described above, or may also contain additional diene rubbers. A diene rubber refers to a rubber with a repeating unit corresponding to a diene monomer having a conjugated double bond. Specific examples of additional diene rubbers include various diene rubbers commonly used in rubber compositions, such as natural rubbers (NR), synthetic isoprene rubbers (IR), styrene butadiene rubbers having a Tg of more than -50 °C (hereinafter also referred to as high-Tg SBR), nitrile rubbers (NBR), chloroprene rubbers (CR), styrene-isoprene copolymer rubbers, butadiene-isoprene copolymer rubbers, and styrene-isoprene-butadiene copolymer rubbers. The concept of these additional diene rubbers also encompasses those modified at the terminal or backbone as necessary and those modified to impart desired characteristics (e.g., modified NR).

In one embodiment, 100 parts by mass of the diene rubber component may contain 20 to 90 parts by mass of a butadiene rubber and 10 to 80 parts by mass of a low-Tg SBR, 40 to 90 parts by mass of a butadiene rubber and 10 to 60 parts by mass of a low-Tg SBR, or 60 to 85 parts by mass of a butadiene rubber and 15 to 40 parts by mass of a low-Tg SBR.

In another embodiment, 100 parts by mass of the diene rubber component may contain 20 to 85 parts by mass of a butadiene rubber, 10 to 70 parts by mass of a low-Tg SBR, and 5 to 40 parts by mass of at least one selected from the group consisting of a natural rubber, a synthetic isoprene rubber, and a high-Tg SBR, or may alternatively contain 40 to 70 parts by mass of a butadiene rubber, 20 to 50 parts by mass of a low-Tg SBR, and 10 to 30 parts by mass of at least one selected from the group consisting of a natural rubber, a synthetic isoprene rubber, and a high-Tg SBR.

In this embodiment, the diene rubber component has an average glass transition temperature (hereinafter referred to as average Tg) of -60 °C or less. When the average Tg of the diene rubber component is -60 °C or less, low-temperature performance can be improved. The average Tg of the diene rubber component is more preferably -65 °C or less, and still more preferably -70 °C or less, or may also be -80 °C or less. The lower limit of the average Tg is not particularly set, but may be -90 °C or more, for example.

The average Tg of a diene rubber component is an average value that is calculated, using the glass transition temperature of each rubber that constitutes the diene rubber component and the mass proportion of each rubber in the diene rubber component, by weighted averaging the glass transition temperatures based on the mass proportions. Specifically, the average Tg is calculated by $Tg = \sum \left\{\left(glass transition temperature of each rubber\right)\times \left(mass proportion of each rubber\right)\right\} .$Here, the mass proportion of each rubber = (parts by mass of each rubber per 100 parts by mass of the diene rubber component)/100.

### [(B) Silica]

The rubber composition according to this embodiment incorporates silica as a filler. As silica, for example, wet silica and dry silica can be mentioned. Preferably, wet silica such as wet precipitated silica or wet gelled silica is used.

The nitrogen adsorption specific surface area (N₂SA) of silica is not particularly limited and may be, for example, 100 to 300 m²/g, 150 to 250 m²/g, or 160 to 220 m²/g. The nitrogen adsorption specific surface area of silica is a BET specific surface area measured in accordance with the BET Method described in JIS K6430:2008.

The silica content is 60 to 200 parts by mass per 100 parts by mass of the diene rubber component. When the silica content is 60 parts by mass or more, wet grip performance can be improved. The silica content per 100 parts by mass of the diene rubber component is preferably 80 to 180 parts by mass, and more preferably 90 to 160 parts by mass, or may also be 110 to 160 parts by mass.

The filler to be incorporated into the rubber composition may be silica alone, and it is also possible to incorporate carbon black together with silica. The filler preferably contains silica in a proportion of 80 mass% or more, more preferably 90 mass% or more. The carbon black content is not particularly limited and may be, per 100 parts by mass of the diene rubber component, 15 parts by mass or less, or 1 to 10 parts by mass.

Carbon black is not particularly limited, and known various species can be used. Specifically, SAF grade (N100s), ISAF grade (N200s), HAF grade (N300s), FEF grade (N500s), and GPF grade (N600s) (all ASTM grades) can be mentioned. Any one of these grades of carbon black can be used alone, and it is also possible to use a combination of two or more kinds.

### [(C) Terpene-Based Resin]

The rubber composition according to this embodiment incorporates a terpene-based resin having a β-pinene unit content of 80 mass% or more. A terpene-based resin having a β-pinene unit content of 80 mass% or more has low compatibility with butadiene rubbers. Therefore, as a result of adding the terpene-based resin to a diene rubber component having an increased proportion of butadiene rubber, the diene rubber component and the terpene-based resin can be phase-separated. As a result, while maintaining the excellent low-temperature performance given by the butadiene rubber, the improving effect on wet grip performance given by the terpene-based resin can be exhibited.

A terpene-based resin is a resin obtained by polymerizing a terpene compound such as α-pinene, β-pinene, limonene, or dipentene, and has a unit derived from a terpene compound. Examples of terpene-based resins include a polyterpene resin obtained by polymerizing a terpene compound alone, as well as modified terpene resins obtained by polymerizing a terpene compound and a monomer other than terpene. As modified terpene resins, for example, aromatic modified terpene resins obtained by polymerizing a terpene compound and an aromatic compound can be mentioned. The terpene-based resin is preferably a polyterpene resin having a β-pinene unit content of 80 mass% or more, and more preferably a pinene resin having a β-pinene unit content of 80 mass% or more.

A β-pinene unit content is the content of β-pinene units in 100 mass% of a terpene-based resin. A β-pinene unit is a unit derived from β-pinene. From the viewpoint of lowering the compatibility with butadiene rubbers and enhancing the effectiveness in simultaneously achieving low-temperature performance and wet grip performance, the β-pinene unit content in the terpene-based resin is 80 mass% or more, more preferably 90 mass% or more, and yet more preferably 95 mass% or more, or may also be 100 mass%.

The α-pinene unit content in the terpene-based resin is 20 mass% or less, more preferably 10 mass% or less, and yet more preferably 5 mass% or less, or may also be 0 mass%. An α-pinene unit content is the content of α-pinene units in 100 mass% of a terpene-based resin. An α-pinene unit is a unit derived from α-pinene.

The softening point of the terpene-based resin is not particularly limited and may be, for example, 100 °C to 150 °C, or 110 °C to 130 °C. Here, the softening point is measured in accordance with ASTM D6090 (published in 1997).

The method for synthesizing a terpene-based resin is not particularly limited. For example, a terpene-based resin can be synthesized by cationically polymerizing a β-pinene-containing monomer using a Lewis acid catalyst. Specific examples of Lewis acid catalysts include, but are not particularly limited to, metal halides (e.g., BF₃, BBr₃, AlF₃, AlBr₃, TiCl₄, TiBr₄, FeCl₃, FeCl₂, SnCl₄, WCl₆, MoCl₅, ZrCl₄, SbCl₃, SbCl₅, TeCl₂, and ZnCl₂), metal alkyl compounds (e.g., Et₃Al, Et₂AlCl, EtAlCl₂, Et₃Al₂Cl₃, (iBu)₃Al, (iBu)₂AlCl, (iBu)AlCl₂, Me₄Sn, Et₄Sn, Bu₄Sn, and Bu₃SnCl), and metal alkoxy compounds (e.g., Al(OR)₃₋ₓClₓ and Ti(OR)_{4-y}Cl_{y} (wherein R represents an alkyl group or an aryl group, x represents an integer of 1 or 2, and y represents an integer of 1 to 3)). Here, Et represents an ethyl group, iBu represents an isobutyl group, Me represents a methyl group, and Bu represents a butyl group.

The terpene-based resin content is 20 to 60 parts by mass per 100 parts by mass of the diene rubber component. When the terpene-based resin content is 20 parts by mass or more, wet grip performance can be improved. When the terpene-based resin content is 60 parts by mass or less, the deterioration of low-temperature performance can be suppressed. The terpene-based resin content per 100 parts by mass of the diene rubber component is preferably 25 parts by mass or more. In addition, the content is preferably less than 60 parts by mass, more preferably 50 parts by mass or less, and still more preferably 45 parts by mass or less, or may also be 40 parts by mass or less.

### [(D) Thioester Group-Containing Silane Coupling Agent]

The rubber composition according to this embodiment incorporates a thioester group-containing silane coupling agent. As a result, the dispersibility of silica can be improved, thereby enhancing fracture strength.

As the thioester group-containing silane coupling agent, one represented by the following general formula (1) can be mentioned.

(R¹)ₘ(R²)ₙSi-R³-S-CO-R⁴ (1)

In formula (1), R¹ represents an alkoxy group having 1 to 3 carbon atoms, R² represents an alkyl group having 1 to 20 carbon atoms, R³ represents an alkanediyl group having 1 to 5 carbon atoms, and R⁴ represents an alkyl group having 1 to 18 carbon atoms, m = 1 to 3, and m + n = 3.

R¹ in formula (1) is preferably a methoxy group or an ethoxy group. R² is preferably an alkyl group having 1 to 4 carbon atoms. In the case where a plurality of R¹s or R²s are present in one molecule, they may be the same or different. m and n are preferably m = 3 and n = 0. R³ is preferably an alkanediyl group having 2 to 4 carbon atoms. R⁴ is preferably an alkyl group having 3 to 15 carbon atoms, and more preferably an alkyl group having 6 to 12 carbon atoms.

As specific examples of thioester group-containing silane coupling agents, 3-pro-pionylthiopropyltrimethoxysilane, 3-hexanoylthiopropyltriethoxysilane, 3-octanoylthiopropyltriethoxysilane, 3-decanoylthiopropyltriethoxysilane, 3-lauroylthiopropyltriethoxysilane, 2-hexanoylthioethyltriethoxysilane, 2-octanoylthioethyltriethoxysilane, 2-decanoylthioethyltri-ethoxysilane, 2-lauroylthioethyltriethoxysilane, 3-hexanoylthiopropyltrimethoxysilane, 3-octanoylthiopropyltrimethoxysilane, 3-decanoylthiopropyltrimethoxysilane, 3-lauroylthiopro-pyltrimethoxysilane, 2-hexanoylthioethyltrimethoxysilane, 2-octanoylthioethyltrimethoxysilane, 2-decanoylthioethyltrimethoxysilane, 2-lauroylthioethyltrimethoxysilane, and the like can be mentioned. Any one of them can be used alone, and it is also possible to use a combination of two or more kinds.

The thioester group-containing silane coupling agent content is 5 to 20 parts by mass, preferably 5 to 15 parts by mass, per 100 parts by mass of silica.

### [Other Components]

In addition to the above components, the rubber composition according to this embodiment may also incorporate various additives generally used in rubber compositions, such as silane coupling agents other than thioester group-containing silane coupling agents, oils, zinc oxide, stearic acid, antioxidants, waxes, vulcanizing agents, and vulcanization accelerators.

The oil content is not particularly limited and may be, for example, per 100 parts by mass of the diene rubber component, 0 to 40 parts by mass, 5 to 35 parts by mass, 10 to 30 parts by mass, or 15 to 25 parts by mass.

The zinc oxide content is not particularly limited and may be, for example, per 100 parts by mass of the diene rubber component, 0 to 10 parts by mass, 0.5 to 5 parts by mass, or 1 to 4 parts by mass.

The stearic acid content is not particularly limited and may be, for example, per 100 parts by mass of the diene rubber component, 0 to 10 parts by mass, 0.5 to 5 parts by mass, or 1 to 4 parts by mass.

As antioxidants, for example, amine-ketone-based, aromatic secondary amine-based, monophenol-based, bisphenol-based, benzimidazole-based, and like various antioxidants can be mentioned. Any one of them can be used alone, and it is also possible to use a combination of two or more kinds. The antioxidant content is not particularly limited and may be, for example, per 100 parts by mass of the diene rubber component, 0 to 10 parts by mass, 0.5 to 5 parts by mass, or 1 to 4 parts by mass.

As a vulcanizing agent, sulfur is preferably used. The vulcanizing agent content is not particularly limited and may be, per 100 parts by mass of the diene rubber component, 0.1 to 10 parts by mass, 0.5 to 5 parts by mass, or 1 to 3 parts by mass.

As vulcanization accelerators, for example, sulfenamide-based, guanidine-based, thiuram-based, thiazole-based, and like various vulcanization accelerators can be mentioned. Any one of them can be used alone, and it is also possible to use a combination of two or more kinds. The vulcanization accelerator content is not particularly limited, but is, per 100 parts by mass of the diene rubber component, preferably 0.1 to 7 parts by mass, and more preferably 0.5 to 5 parts by mass, or may also be 1 to 3 parts by mass.

### [Rubber Composition Preparation Method]

The rubber composition according to this embodiment can be made by kneading in the usual manner using a commonly used mixer such as a Banbury mixer, a kneader, or a roll. That is, for example, in the first mixing stage (non-productive mixing step), additives other than a vulcanizing agent and a vulcanization accelerator are added to a diene rubber component together with silica, a silane coupling agent, and a terpene-based resin, and mixed. Next, in the final mixing stage (productive mixing step), a vulcanizing agent and a vulcanization accelerator are added to the obtained mixture and mixed. As a result, an unvulcanized rubber composition can be prepared.

### [Application of Rubber Composition]

The rubber composition according to this embodiment can be used as a rubber composition for a tire tread. As tires, pneumatic tires of various sizes for various applications, including tires for passenger cars, heavy-duty tires for trucks and buses, and the like, can be mentioned.

As described above, the rubber composition according to this embodiment is capable of simultaneously achieving low-temperature performance and wet grip performance, also has excellent fracture strength, and thus is advantageously used for a tread rubber that forms the contact patch of a winter tire or an all-season tire. Winter tires are tires adapted for running on snowy roads, and include studless tires and snow tires. All-season tires are tires that can be used year-round, from road surfaces in summer to snowy roads in winter, and are also referred to as all-weather tires. In these tires, compared to summer tires, the tread block size is smaller, or the number of tread sipes is greater, and the rubber blocks of such a tire are flexible even at low temperatures.

A tire according to one embodiment is a tire having a tread made using the rubber composition described above. That is, the tire according to one embodiment is provided with a tread rubber made of the above rubber composition.

Some tire tread rubbers have a two-layer structure composed of a cap rubber and a base rubber, while others have a single-layer structure having the two integrated. In the case of a single-layer structure, the tread rubber may be formed from the above rubber composition. In the case of a two-layer structure, the cap rubber, which is on the outer side and contacts the road surface, may be formed from the above rubber composition, the base rubber disposed on the inner side of the cap rubber may be formed from the above rubber composition, or both the cap rubber and the base rubber may be formed from the above rubber composition.

The method for producing a tire is not particularly limited. For example, the above rubber composition is formed into a predetermined shape by extrusion in the usual manner to give an unvulcanized tread rubber member. The tread rubber member is combined with other tire members to make an unvulcanized tire (green tire). Subsequently, vulcanization molding is performed at 140 °C to 180 °C, for example, whereby a tire can be produced.

### EXAMPLES

Examples will be shown hereinafter, but the invention is not limited to these examples.

Components used in the examples and comparative examples are as follows.
- BR 1: Nd-BR, Tg = -102 °C, cis-1,4 bond content = 97 mass%, vinyl group content = 0.9 mass%, "BR 730" manufactured by JSR Corporation
- BR 2: Terminally modified butadiene rubber with polyorganosiloxane group at its terminal, Tg = -92 °C, "Nipol BR 1261" manufactured by Zeon Corporation
- SBR 1: Modified SSBR, Tg = -60 °C, styrene content: 10 mass%, microstructure of butadiene moiety; vinyl content: 42 %, "HPR 840" manufactured by JSR Corporation
- SBR 2: Unmodified SSBR, Tg = -68 °C, oil-extended product with 37.5 parts by mass of oil per 100 parts by mass of rubber content, "TUFDENE 1834" manufactured by Asahi Kasei Corporation
- SBR 3: Modified SSBR, Tg = -24 °C, styrene content: 20.5 mass%, microstructure of butadiene moiety; vinyl content: 55.5 %, "HPR 350" manufactured by JSR Corporation
- NR: RSS#3, Tg = -60°C
- Carbon black: "SEAST 3" manufactured by Tokai Carbon Co., Ltd.
- Silica: "Ultrasil VN3" manufactured by Evonik Industries (N₂SA = 180 m²/g)
- Silane coupling agent 1: 3-Octanoylthiopropyltriethoxysilane (in the above formula (1), R¹ is an ethoxy group, R³ is a trimethylene group, R⁴ is an octyl group, m = 3, and n = 0), "NXT" manufactured by Momentive Performance Materials
   - Silane coupling agent 2: Bis(3-triethoxysilylpropyl)tetrasulfide, "Si69" manufactured by Evonik Industries
- Oil: "PROCESS NC140" manufactured by ENEOS Corporation
- Zinc oxide: "Type 2 Zinc Oxide" manufactured by Mitsui Mining & Smelting Co., Ltd.
- Stearic acid: "LUNAC S-20" manufactured by Kao Corporation
- Antioxidant: "Antigen 6C" manufactured by Sumitomo Chemical Co., Ltd.
- Terpene-based resin 1: β-Pinene unit content = 100 mass%, softening point = 115 °C, "DERCOLYTE S 115" manufactured by DRT
- Terpene-based resin 2: β-Pinene unit content = 98 mass% or more, softening point = 115 °C, "Sylvatraxx 4150" manufactured by KRATON
- Terpene-based resin 3: α-Pinene unit content = 100 mass%, softening point = 115°C, "DERCOLYTE A 115" manufactured by DRT
- Hydrocarbon resin: Styrene-based monomer/aliphatic monomer copolymer resin, softening point = 110 °C, "FTR6110" manufactured by Mitsui Chemicals, Inc.
- Sulfur: "Powder Sulfur" manufactured by Tsurumi Chemical Industry Co., Ltd.
- Vulcanization accelerator CBS: Sulfenamide-based, "NOCCELER CZ-G (CZ)" manufactured by Ouchi Shinko Chemical Industrial Co., Ltd.
- Vulcanization accelerator DPG: Guanidine-based, "NOCCELER D" manufactured by Ouchi Shinko Chemical Industrial Co., Ltd.

The evaluation methods in the examples and comparative examples are as follows.

### (1) Wet Grip Performance

Four prototype tires were mounted on a 2,000-cc 4WD vehicle and run on a road surface covered with water to a water depth of 2 to 3 mm. During running, the ABS was activated to slow the vehicle from 90 km/h to 20 km/h, and the braking distance at that time was measured (average of n = 10). The reciprocal of the braking distance was expressed as an index taking the value of Comparative Example 1 in Table 1, the value of Comparative Example 11 in Table 2, or the value of Comparative Example 21 in Table 3, as 100. The larger the index, the shorter the braking distance, indicating better wet grip performance.

### (2) Low-Temperature Performance

In accordance with JIS K6253:2012, the hardness at a temperature of -5 °C was measured using a Type A durometer. The reciprocal of the hardness was expressed as an index taking the value of Comparative Example 1 in Table 1, the value of Comparative Example 11 in Table 2, or the value of Comparative Example 21 in Table 3, as 100. The larger the index, the higher the softness in a low-temperature environment (-5 °C), indicating better low-temperature performance.

### (3) Fracture Strength

In accordance to JIS K6251:2017, a tensile test (No. 3 dumbbell) was performed to measure tensile strength (N/mm²) and elongation at break (breaking elongation) (%), and the product of tensile strength and elongation at break (tensile product) was determined. The result was expressed as an index taking the value of Comparative Example 1 in Table 1, Comparative Example 11 in Table 2, or Comparative Example 21 in Table 3, as 100. A larger index indicates higher fracture strength.

### [First Experiment Example]

Using a Banbury mixer, following the formulations (parts by mass) shown in Table 1 below, first, in the first mixing stage, ingredients excluding sulfur and a vulcanization accelerator were added to a diene rubber component and kneaded (discharge temperature = 160 °C). Next, in the final mixing stage, sulfur and a vulcanization accelerator were added to the obtained kneaded product and kneaded (discharge temperature = 90 °C), thereby preparing a rubber composition. Incidentally, with respect to the amount of SBR 2 in Table 1, the value in parentheses is the amount of rubber content, and the remainder is the oil amount. In addition, "Average Tg of rubber component" in the table is the average Tg of the diene rubber component (same in Tables 2 and 3).

The obtained unvulcanized rubber composition was vulcanized at 170 °C for 15 minutes to prepare a test piece, and the low-temperature performance and fracture strength were evaluated. In addition, using the unvulcanized rubber composition as a tread rubber, vulcanization molding was performed in the usual manner to make a pneumatic radial tire (winter tire, tire size: 205/55R16). The wet grip performance of the obtained prototype tire was evaluated.

**[Table 1]**

| | Comp. Ex. 1 | Comp. Ex. 2 | Comp. Ex. 3 | Comp. Ex. 4 | Comp. Ex. 5 | Ex. 1 | Ex. 2 | Ex. 3 | Ex. 4 | Ex. 5 | Ex. 6 | Ex. 7 |
|---|---|---|---|---|---|---|---|---|---|---|---|---|
| Formulation (parts by mass) | | | | | | | | | | | | |
| BR 1 | 20 | 20 | 20 | 20 | 20 | 20 | 20 | 20 | 20 | - | - | - |
| BR 2 | - | - | - | - | - | - | - | - | - | 20 | 20 | 20 |
| SBR 1 | 50 | 50 | 50 | 50 | 50 | 50 | 50 | 50 | 50 | 50 | 50 | 50 |
| SBR 2 | 27.5 (20) | 27.5 (20) | 27.5 (20) | 27.5 (20) | 27.5 (20) | 27.5 (20) | 27.5 (20) | 27.5 (20) | 27.5 (20) | 27.5 (20) | 27.5 (20) | 27.5 (20) |
| NR | 10 | 10 | 10 | 10 | 10 | 10 | 10 | 10 | 10 | 10 | 10 | 10 |
| Carbon black | 5 | 5 | 5 | 5 | 5 | 5 | 5 | 5 | 5 | 5 | 5 | 5 |
| Silica | 95 | 95 | 95 | 95 | 95 | 95 | 95 | 95 | 95 | 95 | 95 | 95 |
| Silane coupling agent 1 | - | - | - | 9.5 | 9.5 | 9.5 | 9.5 | 9.5 | 9.5 | 9.5 | 9.5 | 9.5 |
| Silane coupling agent 2 | 9.5 | 9.5 | 9.5 | - | - | - | - | - | - | - | - | - |
| Oil | 5 | 5 | 5 | 5 | 5 | 5 | 5 | 5 | 5 | 5 | 5 | 5 |
| Zinc oxide | 2 | 2 | 2 | 2 | 2 | 2 | 2 | 2 | 2 | 2 | 2 | 2 |
| Stearic acid | 2 | 2 | 2 | 2 | 2 | 2 | 2 | 2 | 2 | 2 | 2 | 2 |
| Antioxidant | 2 | 2 | 2 | 2 | 2 | 2 | 2 | 2 | 2 | 2 | 2 | 2 |
| Terpene-based resin 1 | 30 | - | - | 5 | 65 | 20 | 30 | - | - | - | - | - |
| Terpene-based resin 2 | - | - | - | - | - | - | - | 30 | 45 | 20 | 30 | 45 |
| Terpene-based resin 3 | - | - | 30 | - | - | - | - | - | - | - | - | - |
| Sulfur | 2 | 2 | 2 | 2 | 2 | 2 | 2 | 2 | 2 | 2 | 2 | 2 |
| Vulcanization accelerator CBS | 1.5 | 1.5 | 1.5 | 1.5 | 1.5 | 1.5 | 1.5 | 1.5 | 1.5 | 1.5 | 1.5 | 1.5 |
| Vulcanization accelerator DPG | 0.5 | 0.5 | 0.5 | 0.5 | 0.5 | 0.5 | 0.5 | 0.5 | 0.5 | 0.5 | 0.5 | 0.5 |
| Average Tg of rubber component (°C) | -70 | -70 | -70 | -70 | -70 | -70 | -70 | -70 | -70 | -68 | -68 | -68 |
| Evaluation (index) | | | | | | | | | | | | |
| Wet grip performance | 100 | 85 | 90 | 101 | 120 | 106 | 110 | 112 | 117 | 105 | 110 | 115 |
| Low-temperature performance | 100 | 107 | 101 | 105 | 90 | 103 | 101 | 100 | 97 | 102 | 100 | 98 |
| Fracture strength | 100 | 95 | 102 | 103 | 135 | 107 | 110 | 111 | 125 | 112 | 120 | 128 |

The results are as shown in Table 1. The first experiment example is a case where 20 mass% of the diene rubber component is a butadiene rubber. In Comparative Examples 1 to 3, a sulfide silane coupling agent is used as the silane coupling agent. Among them, in Comparative Example 2, no terpene-based resin was incorporated, and in Comparative Example 3, a terpene-based resin having a high α-pinene unit content was incorporated as the resin. In these Comparative Examples 2 and 3, the wet grip performance was low, and it was difficult to simultaneously achieve low-temperature performance and wet grip performance. Meanwhile, in Comparative Example 1, as a result of incorporating a terpene-based resin having a high β-pinene unit content as the resin, the wet grip performance was significantly improved compared to Comparative Examples 2 and 3, and the effectiveness in simultaneously achieving low-temperature performance and wet grip performance was observed. However, in Comparative Example 1, the fracture strength did not improve compared to Comparative Example 3. On the other hand, in Examples 1 to 7 where a thioester group-containing silane coupling agent was used as the silane coupling agent, compared to Comparative Example 1, without impairing the wet grip performance and low-temperature performance, but rather while improving the effectiveness in simultaneously achieving them, the fracture strength was remarkably improved. In addition, in Examples 5 to 7 where a modified butadiene rubber was used as the butadiene rubber, compared to Examples 1 to 4 where an unmodified butadiene rubber was used, the fracture strength tended to further improve.

### [Second Experiment Example]

A rubber composition was prepared in the same manner as in the first experiment example, except for following the formulations (parts by mass) shown in Table 2 below. In the same manner as in the first experiment example, the wet grip performance, low-temperature performance, and fracture strength of each obtained rubber composition were evaluated. The results are as shown in Table 2.

**[Table 2]**

| | Comp. Ex. 11 | Comp. Ex. 12 | Comp. Ex. 13 | Comp. Ex. 14 | Ex. 11 | Ex. 12 | Ex. 13 | Ex. 14 |
|---|---|---|---|---|---|---|---|---|
| Formulation (parts by mass) | | | | | | | | |
| BR 2 | 40 | 40 | 40 | 40 | 40 | 40 | 40 | 40 |
| SBR 1 | 50 | 50 | 50 | - | 50 | 50 | 50 | 50 |
| SBR 3 | - | - | - | 50 | - | - | - | - |
| NR | 10 | 10 | 10 | 10 | 10 | 10 | 10 | 10 |
| Carbon black | 5 | 5 | 5 | 5 | 5 | 5 | 10 | 10 |
| Silica | 120 | 120 | 120 | 120 | 120 | 120 | 100 | 100 |
| Silane coupling agent 1 | 12 | 12 | 12 | 12 | 12 | 12 | 6.5 | 6.5 |
| Oil | 20 | 20 | 20 | 20 | 20 | 20 | 10 | 10 |
| Zinc oxide | 2 | 2 | 2 | 2 | 2 | 2 | 2 | 2 |
| Stearic acid | 2 | 2 | 2 | 2 | 2 | 2 | 2 | 2 |
| Antioxidant | 2 | 2 | 2 | 2 | 2 | 2 | 2 | 2 |
| Terpene-based resin 1 | - | - | - | - | 20 | 30 | - | - |
| Terpene-based resin 2 | - | 5 | 65 | 30 | - | - | 30 | 45 |
| Terpene-based resin 3 | - 30 | - | - | - | - | - | - | - |
| Sulfur | 2 | 2 | 2 | 2 | 2 | 2 | 2 | 2 |
| Vulcanization accelerator CBS | 1.5 | 1.5 | 1.5 | 1.5 | 1.5 | 1.5 | 1.5 | 1.5 |
| Vulcanization accelerator DPG | 0.5 | 0.5 | 0.5 | 0.5 | 0.5 | 0.5 | 0.5 | 0.5 |
| Average Tg of rubber component (°C) | -72.8 | -72.8 | -72.8 | -54.8 | -72.8 | -72.8 | -72.8 | -72.8 |
| Evaluation (index) | | | | | | | | |
| Wet grip performance | 100 | 100 | 122 | 124 | 108 | 113 | 111 | 118 |
| Low-temperature performance | 100 | 104 | 93 | 94 | 102 | 100 | 101 | 98 |
| Fracture strength | 100 | 94 | 139 | 113 | 106 | 109 | 112 | 130 |

The second experiment example is a case where 40 mass% of the diene rubber component is a butadiene rubber. In Comparative Example 11, a terpene-based resin having a high α-pinene unit content was incorporated as the resin. In Comparative Example 11, the compatibility between the resin and butadiene rubber was high, and it was difficult to simultaneously achieve low-temperature performance and wet grip performance. On the other hand, in Examples 11 to 14, because a terpene-based resin having a high β-pinene unit content was incorporated as the resin, the rubber component and resin were phase-separated. As a result, in Examples 11 to 14, compared to Comparative Example 11, while suppressing the deterioration of low-temperature performance, the wet grip performance was improved, and the fracture strength was also improved.

In Comparative Example 12, the amount of terpene-based resin incorporated was small. Thus, compared to Comparative Example 11, the wet grip performance improving effect was insufficient, and the fracture strength was also inferior. In Comparative Example 13, because the amount of terpene-based resin incorporated was too large, the low-temperature performance deteriorated compared to Comparative Example 11. In Comparative Example 14, an SBR having a high Tg was incorporated without incorporating a low-Tg SBR, and the average Tg of the diene rubber component was high. As a result, although the wet grip performance was excellent, the low-temperature performance greatly deteriorated.

### [Third Experiment Example]

A rubber composition was prepared in the same manner as in the first experiment example, except for following the formulations (parts by mass) shown in Table 3 below. In the same manner as in the first experiment example, the wet grip performance, low-temperature performance, and fracture strength of each obtained rubber composition were evaluated. The results are as shown in Table 3.

**[Table 3]**

| | Comp. Ex. 21 | Comp. Ex. 22 | Comp. Ex. 23 | Comp. Ex. 24 | Ex. 21 | Ex. 22 | Ex. 23 | Ex. 24 |
|---|---|---|---|---|---|---|---|---|
| Formulation (parts by mass) | | | | | | | | |
| BR 2 | 75 | 75 | 75 | 75 | 75 | 75 | 75 | 75 |
| SBR 1 | 25 | 25 | 25 | - | 25 | 25 | 25 | 25 |
| SBR 3 | - | - | - | 25 | - | - | - | - |
| Carbon black | 5 | 5 | 5 | 5 | 5 | 5 | 5 | 5 |
| Silica | 150 | 150 | 150 | 150 | 150 | 150 | 150 | 150 |
| Silane coupling agent 1 | 15 | 15 | 15 | 15 | 15 | 15 | 15 | 15 |
| Oil | 20 | 20 | 20 | 20 | 20 | 20 | 20 | 20 |
| Zinc oxide | 2 | 2 | 2 | 2 | 2 | 2 | 2 | 2 |
| Stearic acid | 2 | 2 | 2 | 2 | 2 | 2 | 2 | 2 |
| Antioxidant | 2 | 2 | 2 | 2 | 2 | 2 | 2 | 2 |
| Terpene-based resin 1 | - | 5 | 65 | 30 | 20 | 30 | - | - |
| Terpene-based resin 2 | - | - | - | - | - | - | 30 | 45 |
| Hydrocarbon resin | 30 | - | - | - | - | - | - | - |
| Sulfur | 2 | 2 | 2 | 2 | 2 | 2 | 2 | 2 |
| Vulcanization accelerator CBS | 1.5 | 1.5 | 1.5 | 1.5 | 1.5 | 1.5 | 1.5 | 1.5 |
| Vulcanization accelerator DPG | 0.5 | 0.5 | 0.5 | 0.5 | 0.5 | 0.5 | 0.5 | 0.5 |
| Average Tg of rubber component (°C) | -84 | -84 | -84 | -75 | -84 | -84 | -84 | -84 |
| Evaluation (index) | | | | | | | | |
| Wet grip performance | 100 | 102 | 126 | 117 | 109 | 114 | 117 | 119 |
| Low-temperature performance | 100 | 104 | 93 | 96 | 100 | 99 | 101 | 98 |
| Fracture strength | 100 | 97 | 120 | 101 | 105 | 106 | 108 | 114 |

The third experiment example is a case where 75 mass% of the diene rubber component is a butadiene rubber. In Comparative Example 21, an aromatic hydrocarbon resin was incorporated as the resin. In Comparative Example 21, the compatibility between the resin and butadiene rubber was high, and it was difficult to simultaneously achieve low-temperature performance and wet grip performance. On the other hand, in Examples 21 to 24 where a terpene-based resin having a high β-pinene unit content was incorporated, compared to Comparative Example 21, while suppressing the deterioration of low-temperature performance, the wet grip performance was improved, and the fracture strength was also improved. In Comparative Example 24, the average Tg of the diene rubber component was -60°C or less. However, because a low-Tg SBR having a Tg of -50 °C or less was not incorporated, the low-temperature performance was inferior to Comparative Example 21, and a fracture strength improving effect was not observed either.

Incidentally, with respect to the various numerical ranges described herein, the upper and lower limits thereof can be arbitrarily combined, and all such combinations are incorporated herein as preferred numerical ranges. In addition, the description of a numerical range "X to Y" means X or more and Y or less.

## Claims

1. A rubber composition for a tire tread, comprising:
100 parts by mass of a diene rubber component containing a butadiene rubber and a styrene butadiene rubber having a glass transition temperature of -50 °C or less, wherein the glass transition temperature is a value measured in accordance with JIS K7121:2012 by a differential scanning calorimetry method at a temperature rise rate of 20 °C/min, the styrene butadiene rubber comprises a modified styrene butadiene rubber, the content of the butadiene rubber is 20 parts by mass or more, and the average glass transition temperature of the diene rubber component is -60 °C or less;
60 to 200 parts by mass of silica; and
20 to 60 parts by mass of a terpene-based resin having a β-pinene unit content of 80 mass% or more,
the rubber composition for a tire tread further comprising 5 to 20 parts by mass of a thioester group-containing silane coupling agent per 100 parts by mass of the silica.

2. The rubber composition for a tire tread according to claim 1, wherein the butadiene rubber comprises a modified butadiene rubber.

3. The rubber composition for a tire tread according to claim 2, wherein the modified butadiene rubber is a butadiene rubber having a functional group that contains at least one heteroatom selected from the group consisting of an oxygen atom, a nitrogen atom, and a silicon atom.

4. The rubber composition for a tire tread according to any one of claims 1 to 3, wherein 100 parts by mass of the diene rubber component contains 40 parts by mass or more of the butadiene rubber.

5. The rubber composition for a tire tread according to any one of claims 1 to 3, wherein 100 parts by mass of the diene rubber component contains 40 to 90 parts by mass of the butadiene rubber and 10 to 60 parts by mass of the styrene butadiene rubber.

6. The rubber composition for a tire tread according to any one of claims 1 to 3, wherein 100 parts by mass of the diene rubber component contains 20 to 85 parts by mass of the butadiene rubber, 10 to 70 parts by mass of the styrene butadiene rubber, and 5 to 40 parts by mass of at least one selected from the group consisting of a natural rubber, a synthetic isoprene rubber, and a styrene butadiene rubber having a glass transition temperature of more than -50 °C.

7. A tire having a tread made using the rubber composition for a tire tread according to any one of claims 1 to 6.

8. The tire according to claim 7, being an all-season tire.

9. The tire according to claim 7, being a winter tire.

## Patentansprüche

1. Kautschukmischung für eine Reifenlauffläche, welche aufweist:
100 Massenteile einer Dien-Kautschukkomponente, die einen Butadien-Kautschuk und einen Styrol-Butadien-Kautschuk mit einer Glasübergangstemperatur von -50 °C oder weniger enthält, wobei die Glasübergangstemperatur ein Wert ist, der gemäß JIS K7121:2012 mittels Differential-Scanning-Kalorimetrie bei einer Temperaturanstiegsrate von 20 °C/min gemessen wurde, wobei der Styrol-Butadien-Kautschuk einen modifizierten Styrol-Butadien-Kautschuk aufweist, der Gehalt an Butadien-Kautschuk 20 Massenteile oder mehr beträgt, und die durchschnittliche Glasübergangstemperatur der Dien-Kautschukkomponente -60 °C oder weniger beträgt,
60 bis 200 Massenteile Siliciumdioxid, und
20 bis 60 Massenteile eines Harzes auf Terpenbasis mit einem Gehalt an β-Pinen-Einheiten von 80 Massenprozent oder mehr,
wobei die Kautschukzusammensetzung für eine Reifenlauffläche ferner 5 bis 20 Massenteile eines Thioestergruppen enthaltenden Silan-Haftvermittlers pro 100 Massenteile des Siliciumdioxids aufweist.

2. Kautschukzusammensetzung für eine Reifenlauffläche nach Anspruch 1, wobei der Butadien-Kautschuk einen modifizierten Butadien-Kautschuk aufweist.

3. Kautschukzusammensetzung für eine Reifenlauffläche nach Anspruch 2, wobei der modifizierte Butadien-Kautschuk ein Butadien-Kautschuk ist, der eine funktionelle Gruppe aufweist, die mindestens ein Heteroatom enthält, das aus der Gruppe ausgewählt worden ist, die ein Sauerstoffatom, ein Stickstoffatom und ein Siliziumatom umfasst.

4. Kautschukzusammensetzung für eine Reifenlauffläche nach einem der Ansprüche 1 bis 3, wobei 100 Massenteile der Dien-Kautschukkomponente 40 Massenteile oder mehr des Butadien-Kautschuks enthalten.

5. Kautschukzusammensetzung für eine Reifenlauffläche nach einem der Ansprüche 1 bis 3, wobei 100 Massenteile der Dien-Kautschukkomponente 40 bis 90 Massenteile des Butadien-Kautschuks und 10 bis 60 Massenteile des Styrol-Butadien-Kautschuks enthalten.

6. Kautschukzusammensetzung für eine Reifenlauffläche nach einem der Ansprüche 1 bis 3, wobei 100 Massenteile der Dien-Kautschukkomponente 20 bis 85 Massenteile Butadien-Kautschuk, 10 bis 70 Massenteile Styrol-Butadien-Kautschuk und 5 bis 40 Massenteile aufweist, der mindestens aus der Gruppe ausgewählt worden ist, die einen Naturkautschuk, einen synthetischem Isopren-Kautschuk und einen Styrol-Butadien-Kautschuk mit einer Glasübergangstemperatur von mehr als -50 °C umfasst.

7. Reifen mit einer Lauffläche, die mittels der Kautschukzusammensetzung für eine Reifenlauffläche nach einem der Ansprüche 1 bis 6 hergestellt ist.

8. Reifen nach Anspruch 7, bei dem es sich um einen Ganzjahresreifen handelt.

9. Reifen nach Anspruch 7, bei dem es sich um einen Winterreifen handelt.

## Revendications

1. Composition de caoutchouc pour une bande de roulement de pneu, comprenant :
100 parties en masse d'un composant de caoutchouc diénique contenant un caoutchouc butadiène et un caoutchouc styrène-butadiène ayant une température de transition vitreuse de -50 °C ou moins, dans laquelle la température de transition vitreuse est une valeur mesurée conformément à JIS K7121:2012 par un procédé de calorimétrie différentielle à balayage à une vitesse d'élévation de température de 20 °C/min, le caoutchouc styrène-butadiène comprend un caoutchouc styrène-butadiène modifié, la teneur du caoutchouc butadiène est de 20 parties en masse ou plus, et la température de transition vitreuse moyenne du composant de caoutchouc diénique est de -60 °C ou moins ;
60 à 200 parties en masse de silice ; et
20 à 60 parties en masse d'une résine à base de terpène ayant une teneur en motif β-pinène de 80 % en masse ou plus,
la composition de caoutchouc pour une bande de roulement de pneu comprenant en outre 5 à 20 parties en masse d'un agent de couplage silane contenant un groupe thioester pour 100 parties en masse de la silice.

2. Composition de caoutchouc pour une bande de roulement de pneu selon la revendication 1, dans laquelle le caoutchouc butadiène comprend un caoutchouc butadiène modifié.

3. Composition de caoutchouc pour une bande de roulement de pneu selon la revendication 2, dans laquelle le caoutchouc butadiène modifié est un caoutchouc butadiène ayant un groupe fonctionnel qui contient au moins un hétéroatome sélectionné dans le groupe constitué d'un atome d'oxygène, d'un atome d'azote, et d'un atome de silicium.

4. Composition de caoutchouc pour une bande de roulement de pneu selon l'une quelconque des revendications 1 à 3, dans laquelle 100 parties en masse du composant de caoutchouc diénique contient 40 parties en masse ou plus du caoutchouc butadiène.

5. Composition de caoutchouc pour une bande de roulement de pneu selon l'une quelconque des revendications 1 à 3, dans laquelle 100 parties en masse du composant de caoutchouc diénique contient 40 à 90 parties en masse du caoutchouc butadiène et 10 à 60 parties en masse du caoutchouc styrène-butadiène.

6. Composition de caoutchouc pour une bande de roulement de pneu selon l'une quelconque des revendications 1 à 3, dans laquelle 100 parties en masse du composant de caoutchouc diénique contient 20 à 85 parties en masse du caoutchouc butadiène, 10 à 70 parties en masse du caoutchouc styrène-butadiène, et 5 à 40 parties en masse d'au moins un élément sélectionné dans le groupe constitué d'un caoutchouc naturel, d'un caoutchouc isoprène synthétique, et d'un caoutchouc styrène-butadiène ayant une température de transition vitreuse de plus de -50 °C.

7. Pneu ayant une bande de roulement fabriquée en utilisant la composition de caoutchouc pour une bande de roulement de pneu selon l'une quelconque des revendications 1 à 6.

8. Pneu selon la revendication 7, étant un pneu toutes saisons.

9. Pneu selon la revendication 7, étant un pneu d'hiver.
